Europäisches Patentamt

European Patent Office

Office européen des brevets

(11) Publication number: **0 295 519**
**A1**

## EUROPEAN PATENT APPLICATION

(21) Application number: 88108966.8

(22) Date of filing: 04.06.88

(51) Int. Cl.⁴: **C08F 2/00 , B01J 19/18 ,**
**C08F 236/10**

(30) Priority: 15.06.87 IT 3519

(43) Date of publication of application:
**21.12.88 Bulletin 88/51**

(84) Designated Contracting States:
**BE CH DE ES FR GB LI NL**

(71) Applicant: **Piani, Maria Luisa**
**Via Cavallotti 8**
**I-48018 Faenza Ravenna(IT)**

(72) Inventor: **Piani, Maria Luisa**
**Via Cavallotti 8**
**I-48018 Faenza Ravenna(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Apparatus for blocking the copolymerization reaction in systems for the continuous-cycle production of SBR elastomers or the like.**

(57) The apparatus comprises a refrigerated reactor (2) with mechanical agitator (8, 9), which has a first duct (14a) associated with its inlet (6) and a second duct (14b) associated with its outlet (7), both ducts (14a, 14b) being connected to a line (13) for feeding a blocking agent. The ducts (14a, 14b) have adjustable regulation and cut-off valves (15a, 15b, 16a, 16b) coordinately controlled to allow the cumulative passage of the intended amount of blocking agent. The valves (15a, 15b, 16a, 16b) are left unchanged, or the valves (15a, 16a) associated with the input are opened or closed further, or the valves (15b, 16b) associated with the output (7) are closed or opened further, if the value of the solid part at the output from the system is correct or higher or lower than the intended one, indicating a reaction which has extended for too long or too short a time.

# APPARATUS FOR BLOCKING THE COPOLYMERIZATION REACTION IN SYSTEMS FOR THE CONTINUOUS-CYCLE PRODUCTION OF SBR ELASTOMERS OR THE LIKE

The present invention relates to an apparatus for blocking the copolymerization reaction in systems for the continuous-cycle production of SBR elastomers or the like.

In systems for the production of elastomers or the like it is known to perform the polymerization process, usually an exothermic polymerization process, continuously in large devices.

The various required ingredients and additives (butadiene, styrene, soap, water), originating from respective tanks, are pumped and mixed together and then refrigerated in an ammonia refrigerator to bring them to a required temperature (between 5° and 10° C); subsequently they are mixed with a catalyst which triggers the copolymerization reaction between the two monomers, butadiene and styrene.

This reaction continues inside a battery of refrigerated line reactors equiped with mechanical agitators, present in a numerically large series (at least fifteen or sixteen elements).

At the end of this series of reactors the compound is introduced into an apparatus for blocking the copolymerization reaction, currently constituted by a number of pipe reactors, for example ten reactors, having their inlets and their outlets mutually connected in series, alternately upwardly and downwardly.

At the mutual connections of these pipe reactors there are respective pipes, cut-off by respective cocks, for feeding a blocking agent adapted to cause the interruption of the copolymerization reaction.

The volume of these pipe reactors is substantially equal to the volume of each of the reactors with mechanical agitator and therefore the time required by the materials to flow through this series of pipes is substantially equal to the time which the material takes to flow through a reactor; in order to obtain products with desired physical-chemical characteristics it is necessary that the copolymerization reaction be interrupted at a precise moment, which moment is determined according to the quantity of solid copolymer which is present, with respect to the total amount of material at the output of the blocking apparatus, which quantity is determined by periodical laboratory analyses.

To achieve this, the material is periodically analyzed at the output of the pipe reactors and the blocking agent is introduced into the same or into one of the preceding or successive connections to the blocking agent feed duct, depending on whether the analysis has yielded a correct value or one greater or lower than the acceptable value of solid material.

If, by way of hypothesis, the required percentage value of solid copolymer is comprised between 24.8% and 25.2% and the value of the analyzed sample is 24.5%, this means that the copolymerization reaction was blocked too soon and that therefore the blocking agent must be introduced in a position successive to the one in which it is currently introduced to allow the reaction to continue longer, while if the value of the sample is 25.5% this means that the reaction continued for too long a time and that therefore the blocking agent must be introduced earlier into the blocking apparatus so as to interrupt the reaction sooner.

This known system has some disadvantages which negatively affect the product: the blocking of the reaction occurs without controlling the temperature, which can thus rise to considerable values, the narrowings of the connections of the pipes and valves cause damage to the molecular structure of the solidified material and since there is no remixing the distribution of the blocking agent is not uniform and instantaneous.

Other negative aspects reside in the fact that the series of pipe reactors determines a considerable loss of load on the entire system, which loss reflects on the devices arranged upstream, risking the exposure of said devices to pressures proximate to the maximum allowable values; furthermore the valves for the control of the blocking agent are manual and distant from the control room so that the operator wastes time during manual maneuvers.

The technical aim of the present invention is to obviate the above described disadvantages, i.e. to provide an apparatus for blocking copolymerization reactions which can be made to operate remotely, which is inexpensive, is extremely precise in that it can modify the blocking of the copolymerization reaction as required and which can be fully automated.

This aim and these objects are achieved by the present apparatus for blocking the copolymerization reaction in systems for the continuous-cycle production of SBR elastomers or the like, characterized in that it comprises at least one refrigerated reactor with mechanical agitator which has a first duct connected to its inlet and a second duct connected to its outlet, both ducts being connected to a line for feeding a blocking agent, and intercepted by adjustable regulation and cut-off valves, coordinately controlled so as to allow the cumulative passage of the intended amount of blocking agent, the valves being left unchanged or the valves connected to the input being opened or closed further, and accordingly the valves connected to the output being closed or opened further, if the quantity of the solid at the output from the system is correct or higher or lower than the intended one, indicating a reaction which has extended for too long or too short a time.

Further peculiarities will become apparent from the detailed description of a preferred but not exclusive embodiment of an apparatus according to the invention, illustrated only by way of non-limitative example in the accompanying drawings, wherein:

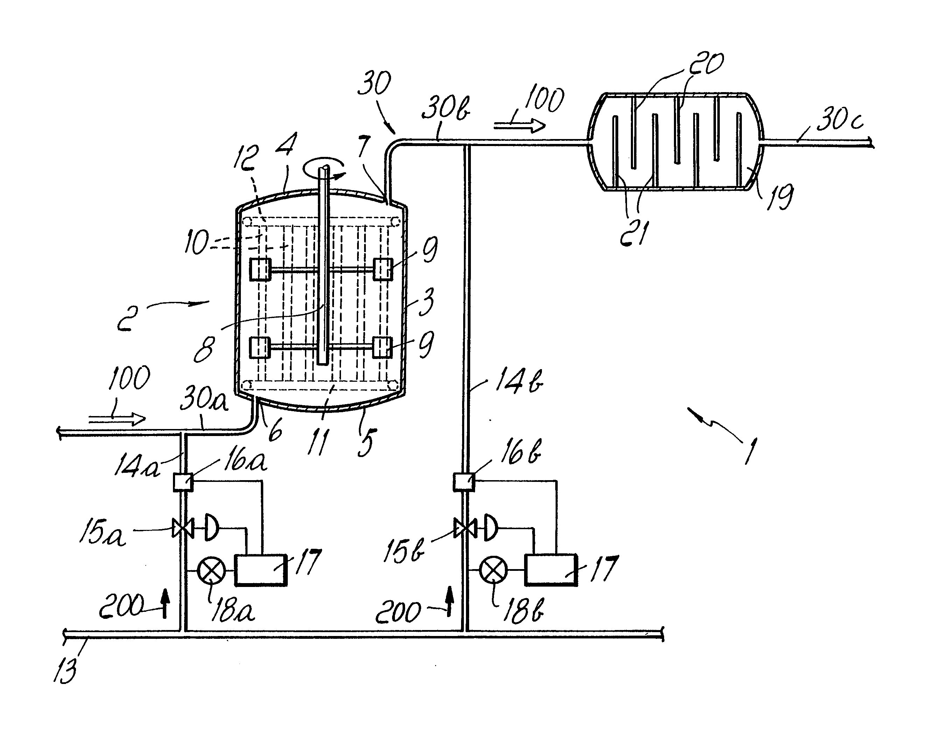

the only figure is a schematic view of an apparatus for blocking the copolymerization reaction according to the invention.

With particular reference to this figure, the reference numeral 1 generally indicates the apparatus for blocking the copolymerization reaction in systems for the continuous-cycle production of SBR elastomers or the like.

The apparatus 1 is arranged at the end of an elastomer production line between a series of refrigerated reactors with mechanical agitators and a tank for the separation of the latex (solid-liquid) from the gas immediately ahead whereof a station is provided for the drawing of samples to be analyzed to determine the quantity of solid product with respect to the liquid, this parameter being used to determine whether the reaction has occurred correctly.

The apparatus 1 is constituted by at least one reactor 2 with mechanical agitator of the type constituted by a cylindrical container 3 with vertical axis which is upwardly and downwardly closed by two slightly convex covers 4,5; the cover 5 has an inlet 6 communicating with a material flow line 30 having a first material flow line portion 30a and the cover 4 has an outlet 7 communicating with a second portion 30b of the material flow line 30; the upper opening and the lower discharge port for the emptying of the reactor 2 are not illustrated for clarification purposes.

A vertical shaft 8 is located axially in the reactor 2, and series of numerous mixing blades 9 are keyed thereto; the shaft 8 is continuously rotatably actuated by a motor-reducer assembly, not shown in the figure.

The container 3 is refrigerated by means of vertical tube nests 10 which are downwardly connected to a toroidal duct 11 and, upwardly, to a toroidal duct 12 respectively for the feed and the removal of refrigerating ammonia, which ammonia is pumped in a known refrigerating circuit.

The reference numeral 13 indicates a line for feeding blocking agent, which line 13 is connected by means of first and second ducts 14a,14b to the inlet 6 and to the outlet 7 of the reactor 2 via first and second material flow line portions 30a, 30b so that the blocking agent may be introduced immediately downstream and immediately upstream of the reactor 2.

The first and second ducts 14a and 14b are throttled or cut-off by respective adjustable regulation valves 15 and cut-off valves 16 which are preferably of the pneumatic type, actuated by circuits fed by respective outputs from a central unit 17 for the control of the circuits, to which central unit there arrive the pressure signals of the circuits detected by the sensors 18. Advantageously, the cut-off valves 16 are arranged in series and separate from the regulation valves 15, and are connected to the pneumatic actuation circuit 17 in parallel to the regulation valves 15.

Upstream of the reactor there is expediently connected a static mixer 19 of the type constituted by a closed cylindrical container arranged with horizontal axis and internally divided by partitions 20,21 advantageously alternately fixed to the top and to the base to define a series of chambers successively communicating upwardly and downwardly to define a tortuous path.

The relative opening and closure of the valves 15a, 15b, 16a, 16b, associated with the ducts 14a and 14b is effected as a function of the value of the amount of solid, with respect to the total product, detected by the analyses; starting from the assumption that the amount of total blocking agent which is introduced must remain constant in time (in view of the invariance of the flow of material being processed), the agent is introduced through the ducts 14a and 14b in a ratio, for example, of respectively 30% and 70%; if in the course of time the value of the solid part remains within an acceptable range, the valves are not regulated, if instead the value of the solid part assumes a value slightly greater than normal, this means that the reaction has extended beyond its preset time, i.e. that it is necessary to block it earlier: in practice the flow of blocking agent through the second duct 14b is decreased while the flow of blocking agent through the first duct 14a is increased (bringing it for example to 35% and 65%).

One then checks the value of the successive sample to assess whether the new ratio is acceptable or not, and if necessary, the valves are further regulated until the desired parameters are obtained.

In the figure the white arrows 100 indicate the flow of the material through the first material flow line portion 30a and the second material flow line portion 30b, while the black arrows 200 indicate the flow of blocking agent through the blocking agent feed line 13.

It should be noted that advantageously the entire battery of reactors of the reaction series is equipped with ducts connected to the blocking agent line so as to be able to introduce the blocking agent into any point of the reactors where this is necessary: in particular by providing each input of the reactors with a group of cut-off and regulation valve elements it is possible to connect the reactors in any succession and to make any one or more reactors assume the reaction blocking function.

In this manner the reactors are crossed by the reacting product and the blocking agent is introduced where required without its introduction interfering with the flow of the material: i.e., in order to modify the reaction characteristics it is not necessary to empty or fill some of the reactors (as occurs in currently used processes), since they are already full of material in transit; it is sufficient, as mentioned, to merely modify the region of introduction of the blocking agent.

Furthermore all the details may be replaced with other technically equivalent ones.

In practice, the materials employed, as well as the shapes and dimensions, may be any according to the requirements, without thereby abandoning the scope of protection of the following claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Apparatus (1) for blocking the copolymerization reaction in systems for the continuous-cycle production of SBR elastomers or the like, characterized in that it comprises at least one refrigerated reactor (2) with mechanical agitator (8), which has a first duct (14a) connected to its inlet (6) and a second duct (14b) connected to its outlet (7), both ducts (14a, 14b) being connected to a line (13) for feeding blocking agent, and intercepted by adjustable regulation valves (15) and cut-off valves (16) coordinately controlled to allow the cumulative passage of the intended amount of blocking agent, the valves being left unchanged, or the valves connected to the input being opened or closed further, or the valves connected to the output being closed or opened further, if the value of the solid at the output from the system is correct or higher or lower than the intended one, indicating a reaction which has extended for too long or too short a time.

2. Apparatus according to claim 1, characterized in that said reactor (2) with mechanical agitator (8) is one of the reactors of the reaction apparatus.

3. Apparatus according to claim 1, characterized in that downstream of said reactor there is fitted a static mixer (19) of the type constituted by a horizontally fed closed container internally divided by partitions (20, 21) rigidly associated alternately to its top and base.

4. Apparatus according to claim 1, characterized in that said regulator valves (15) and cut-off valves (16) are pneumatically operated and are operatively controlled by a central distribution unit (17) actuated directly or indirectly by the laboratory for the analysis of the composition of the material in output.

5. Apparatus according to claim 1, characterized in that said cut-off valves (16) are arranged in series and separate from said regulation valves (15) and are connected to the pneumatic actuation circuit (17) in parallel to said regulator valves.

6. Apparatus according to claim 1, characterized in that said refrigerated mechanical reactor (2) is constituted by a closed cylindrical container with vertical axis which is downwardly provided with the inlet (6) and upwardly with the output (7) for the material, and has in its interior a series of blades (9) mounted axially rotatable and actuated by a motor-reducer unit and which has peripherally arranged groups of vertical tube nests (10) which are connected below and above respective toroidal ducts (11, 12) for the introduction and removal of a refrigerating mixture pumped in an external refrigerating circuit.

7. Apparatus for blocking the copolymerization reaction in systems for the continuous-cycle production of SBR elastomers or the like, characterized in that it comprises at least one reactor (2) having at least one inlet (6) and at least one outlet (7), a first material flow line portion (30a) connected to said inlet (6), a second material flow line portion (30b) connected to said outlet (7), at least one blocking agent feed line (13), first duct means (14a) connecting said blocking agent feed line (13) to said first material flow line portion (30a) downstream of said reactor (2), and second duct means (14b) connecting said blocking agent feed line (13) to said second material flow line portion (30b) upstream of said reactor, valve means (15a, 15b, 16a 16b) adapted for selectively controlling blocking agent flowing through said first duct means (14a) and said second duct means (14b), and control means (17) adapted to control said valve means (15a, 15b, 16a, 16b).

8. Apparatus according to claim 7, characterized in that it further comprises a third material flow line portion (30c), first mixing means (8, 9) located inside said reactor (2), and second mixing means (19, 20, 21) located between said second material flow line portion (30b) and said third material flow line portion (30c).

9. Apparatus according to claim 7 or 8, characterized in that it further comprises sensor means (18) associated with said first duct means (14a) and said second duct means (14b) and being adapted for transmitting pressure signals to said control means (17).

EP 0 295 519 A1

# EUROPEAN SEARCH REPORT

**European Patent Office**

. Application number

| | DOCUMENTS CONSIDERED TO BE RELEVANT | | EP 88108966.8 |
|---|---|---|---|

| Category | Citation of document with indication, where appropriate, of relevant passages | Relevant to claim | CLASSIFICATION OF THE APPLICATION (Int. Cl 4) |
|---|---|---|---|
| A | EP - A1 - 0 176 611 (THE DOW CHEMICAL COMPANY)<br>   * Example 1; claims *<br>   -- | 1,4,7,8 | C 08 F 2/00<br>B 01 J 19/18<br>C 08 F 236/10 |
| A | EP - A2 - 0 165 416 (MITSUBISHI RAYON CO. LTD.)<br>   * Examples; claims; fig. 1 *<br>   -- | 1,4,7,8 | |
| A | GB - A - 2 095 688 (TOYO ENGINEERING CORPORATION)<br>   * Fig. 1; claims *<br>   ---- | 1,4,7,8 | |
| | | | **TECHNICAL FIELDS SEARCHED (Int. Cl.4)**<br><br>C 08 F<br>B 01 J |

The present search report has been drawn up for all claims

| Place of search | Date of completion of the search | Examiner |
|---|---|---|
| VIENNA | 29-08-1988 | TENGLER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82